# FASCICULE DE BREVET EUROPEEN

(11) **EP 3 721 274 B1**
(45) Date de publication et mention de la délivrance du brevet: **19.10.2022**
(21) Numéro de dépôt: 18827216.5
(22) Date de dépôt: 05.12.2018
(51) Int. Cl.: G02B 6/36, G02B 6/38

(54) **ENSEMBLE DE CONNEXION OPTIQUE ET SYSTEME DE CONNEXION COMPRENANT UN ENSEMBLE DE CONNEXION OPTIQUE**
OPTISCHE VERBINDUNGSANORDNUNG UND VERBINDUNGSSYSTEM MIT EINER SOLCHEN OPTISCHEN VERBINDUNGSANORDNUNG
OPTICAL CONNECTION ASSEMBLY AND CONNECTION SYSTEM COMPRISING SUCH AN OPTICAL CONNECTION ASSEMBLY

(30) Priorité: 05.12.2017 FR 1761664
(43) Date de publication de la demande: 14.10.2020
(73) Titulaire: iXBlue, 78100 Saint-Germain-en-Laye (FR)
(72) Inventeur: ARDITTY, Hervé, 78100 Saint-Germain-en-Laye (FR); GRALL, Sébastien, 78100 Saint-Germain-en-Laye (FR); LAPORTE, Jonathan, 78100 Saint-Germain-en-Laye (FR); GIROUSSENS, Christian, 78100 Saint-Germain-en-Laye (FR); TOUIN, Gildas, 78100 Saint-Germain-en-Laye (FR); MOSCA, Frédéric, 78100 Saint-Germain-en-Laye (FR); DELORT, Eric, 78100 Saint-Germain-en-Laye (FR); CHAIZE, Carole, 78100 Saint-Germain-en-Laye (FR)
(74) Mandataire: Jacobacci Coralis Harle
(86) Numéro de dépôt international: PCT/FR2018/053120
(87) Numéro de publication internationale: WO 2019/110931

(56) Documents cités:
- EP-A1- 1 341 013
- EP-A1- 2 879 242
- CA-A- 1 239 822
- US-A1- 2015 316 726
- US-B2- 9 291 777

## Description

### DOMAINE TECHNIQUE AUQUEL SE RAPPORTE L'INVENTION

La présente invention concerne de manière générale la connexion de deux ensembles de fibres optiques au niveau d'un connecteur optique.

Elle concerne plus particulièrement un ensemble de connexion optique, et un système de connexion comprenant un tel ensemble de connexion optique.

La présente invention trouve notamment à s'appliquer dans le domaine de la connexion de câbles sous-marins destinés à transporter l'électricité produite par des hydroliennes.

### ARRIERE-PLAN TECHNOLOGIQUE

On connaît des connecteurs sous-marins connectables sous l'eau, caractéristique parfois désignée par l'appellation anglo-saxonne *"wet-mate".* De tels connecteurs peuvent permettre l'établissement d'une connexion optique, typiquement destinée au transport de données au moyen de fibres optiques, généralement en sus d'une connexion électrique dans le cadre du transport d'électricité.

Dans les dispositifs connus, l'accouplement de deux connecteurs complémentaires nécessite un alignement précis d'un connecteur par rapport à l'autre selon un axe horizontal (alignement particulier important pour assurer la connexion optique) et l'exercice de forces horizontales opposées pour le raccordement des deux connecteurs.

Une telle conception implique l'utilisation de mécanismes d'alignement à 5 degrés de liberté dans le cas des connecteurs coaxiaux et à 6 degrés de liberté dans le cas des connecteurs à broches. D'autres mécanismes doivent par ailleurs être prévus pour l'exercice des forces horizontales de raccordement.

De ce fait, les connecteurs connus sont complexes et l'établissement d'une connexion par l'accouplement de deux connecteurs est une procédure délicate.

Des ensembles de connexion optique de l'art antérieur sont connus de US 2015/316726 A1, US 9 291 777 B2, CA 1 39 822 A.

De telles solutions ne peuvent donc pas convenir lorsque le temps disponible pour effectuer la connexion est limité, comme c'est le cas par exemple pour la connexion de câbles sous-marins destinés à transporter l'électricité produite par des hydroliennes. En effet, de telles installations sont situées dans des lieux où le courant marin est important et où la période propice à une connexion (généralement pendant l'étale) est donc de courte durée.

### OBJET DE L'INVENTION

Afin de remédier à l'inconvénient précité de l'état de la technique, la présente invention propose

un ensemble de connexion optique comme tel que défini par la revendication 1.

Chaque organe de positionnement angulaire complémentaire une forme, présentée par l'embase du deuxième connecteur optique, complémentaire de l'un des organes de positionnement angulaire du premier connecteur optique.

On peut prévoir en particulier que les organes de positionnement angulaire du premier connecteur optique, ou que les organes de positionnement angulaires complémentaires du deuxième connecteur optique, soient réalisés sous la forme d'évidements comprenant une portion de guidage évasée du côté de l'ouverture de l'évidement, les ouvertures desdits évidements étant contigües les unes des autres. Les ouvertures desdits évidements peuvent être réparties tout le long de la circonférence du support, ou de l'embase.

Les éléments optiques du deuxième connecteur optique étant des éléments de collimation, que ladite position angulaire du support par rapport à l'embase, fixée par lesdits organes de positionnement, soit une position angulaire de couplage pour laquelle une partie au moins des éléments de collimation du premier connecteur optique se trouvent situés en vis-à-vis d'éléments de collimation du deuxième connecteur optique.

L'ensemble de connexion optique a plusieurs positions angulaires de couplage distinctes. Les organes de positionnement angulaire et les organes de positionnement angulaire complémentaires sont alors agencés de manière à fixer la position angulaire relative du support par rapport à l'embase, indifféremment dans l'une ou l'autre desdites positions angulaires de couplage, chaque position angulaire de couplage étant telle que, dans cette position, une partie au moins des éléments de collimation du premier connecteur optique se trouvent situés en vis-à-vis d'éléments de collimation du deuxième connecteur optique.

On peut prévoir que deux quelconque desdites positions angulaires de couplage, voisines, soient séparées par un même écart angulaire donné, quel que soit le couple de positions angulaires de couplage voisines considérées.

Le nombre d'éléments de collimation du premier connecteur optique qui sont équidistants de l'axe de rotation peut notamment être un multiple du nombre de positions angulaires de couplage de l'ensemble de connexion optique.

On peut prévoir également que l'un au moins desdits organes de positionnement angulaire complémentaires est un évidement conçu pour recevoir le doigt précité.

L'embase du deuxième connecteur optique peut comprendre en outre une face plane conçue pour coopérer avec ladite surface perpendiculaire à la direction d'extension de l'organe de positionnement angulaire, de manière à former une butée axiale.

Il est aussi prévu un connecteur électrique comprenant un capot, au moins une piste électriquement conductrice, et un connecteur optique tel que le premier connecteur optique décrit ci-dessus.

Dans un tel connecteur électrique, le palier du connecteur optique peut en particulier être solidaire du capot, la piste électriquement conductrice entourant l'axe de rotation défini par ce palier.

L'invention prévoit également un système de connexion (sous-marin) comprenant un premier connecteur électrique, tel que présenté ci-dessus, ainsi qu'un deuxième connecteur électrique comprenant une base, au moins une piste électriquement conductrice, ainsi qu'un autre connecteur optique qui comporte une embase portant des éléments optiques et qui présente des organes de positionnement angulaire complémentaires, chacun adapté à coopérer avec l'un des organes de positionnement angulaire du connecteur optique du premier connecteur électrique pour fixer la position angulaire relative du support par rapport à l'embase.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, vu de côté et en coupe, un système de connexion sous-marin, comportant un ensemble de connexion optique mettant en œuvre les enseignements de l'invention ;
- la figure 2 représente schématiquement l'ensemble de connexion optique de la figure 1, plus en détail et en perspective ;
- la figure 3 est une vue de dessus de l'ensemble de connexion optique de la figure 1 ;
- la figure 4 est une vue en coupe de l'ensemble de connexion optique de la figure 1, selon le plan de coupe A-A représenté sur la figure 3 ;
- la figure 5 représente schématiquement, en perspective, une pièce de guidage d'un premier connecteur optique de l'ensemble de connexion optique de la figure 1 ; et
- la figure 6 représente schématiquement, en perspective, une pièce de guidage d'un deuxième connecteur optique de l'ensemble de connexion optique de la figure 1.

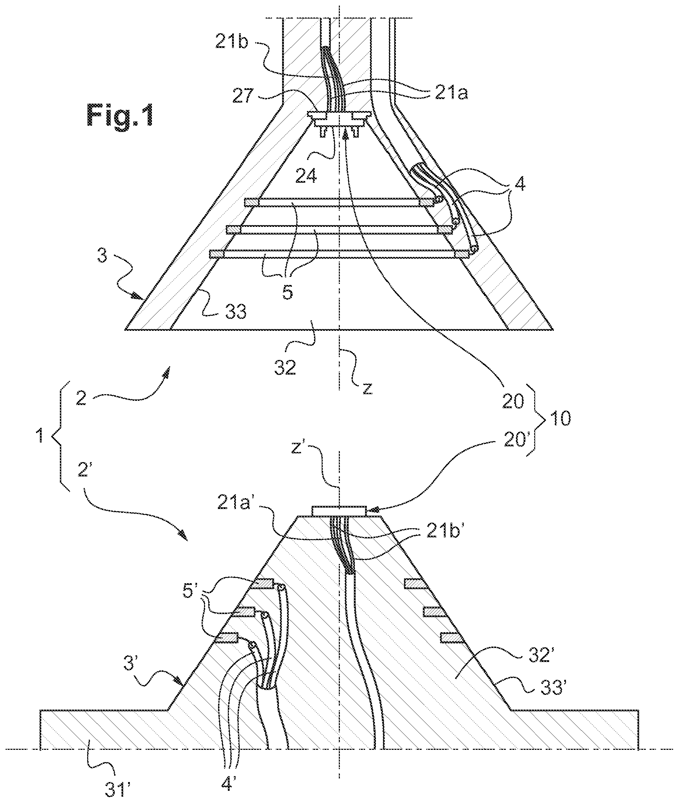

La figure 1 représente schématiquement les principaux éléments d'un système de connexion 1 sous-marin qui comprend un premier élément de connexion 2, supérieur, et un deuxième élément de connexion 2', inférieur, dissociables l'un de l'autre (sur la figure 1, ces deux éléments de connexion 2 et 2' sont représentés dissociés l'un de l'autre).

Le deuxième élément de connexion 2' est destiné à reposer sur un fond marin, et à recevoir le premier élément de connexion 2 pour établir entre eux une connexion optique, ainsi, ici, qu'une connexion électrique.

Cette connexion optique est réalisée au moyen d'un ensemble de connexion optique 10, qui comprend un premier connecteur optique 20 et un deuxième connecteur optique 20' emboitables, montés respectivement sur le premier élément de connexion 2 et sur le deuxième élément de connexion 2'.

Le premier connecteur optique 20 et le deuxième connecteur optique 20' présentent chacun un axe z, z' de symétrie en rotation, et sont destinés à s'emboiter coaxialement l'un avec l'autre.

Le système de connexion 1 sous-marin qui vient d'être présenté sera décrit dans son ensemble dans un premier temps, et l'ensemble de connexion optique 10 qui l'équipe sera décrit plus en détail ultérieurement.

Le deuxième élément de connexion 2' du système de connexion 1 sous-marin comprend une base 3' formée d'un socle 31' (représenté partiellement), destiné à reposer sur le fond marin et à partir duquel s'élève une partie en saillie 32' globalement tronconique destinée à recevoir le premier élément de connexion 2. Le diamètre de cette partie en saillie 32' est plus petit au sommet qu'au niveau du socle 31'.

Le deuxième connecteur optique 20' est monté au sommet de cette partie en saillie 32', coaxialement, c'est-à-dire de sorte que l'axe z' de symétrie par rotation du deuxième connecteur optique coïncide avec l'axe défini par la partie en saillie 32' (axe du tronc de cône que forme cette partie en saillie).

Le deuxième élément de connexion 2' abrite un ensemble de fibres optiques 21' (appelé dans la suite deuxième ensemble de fibres optiques), reliées à leurs extrémités au deuxième connecteur optique 20'.

Le deuxième élément de connexion 2' comprend aussi plusieurs pistes de connexion 5' métalliques annulaires, de même axe que ladite partie en saillie 32'. Chaque piste de connexion 5' annulaire affleure au niveau d'une surface latérale 33' tronconique de la partie en saillie 32'. Les pistes de connexion 5' annulaires s'étagent à distance les unes des autres, le long de l'axe de la partie en saillie 32'.

Le deuxième élément de connexion 2' abrite par ailleurs un ensemble de connecteurs électriques 4' (appelé dans la suite deuxième ensemble de connecteurs électriques) dont chacun est relié électriquement à l'une des pistes de connexion 5'.

Le premier élément de connexion 2 du système de connexion sous-marin 1 comprend quant à lui un capot 3 (représenté partiellement) qui, à la manière d'un chapeau, délimite un logement 32 complémentaire de la partie en saillie 32' de la base 3'. Ce logement 32 est délimité plus précisément par une surface interne 33 du capot, globalement tronconique.

Le premier connecteur optique 20 est monté au fond du logement 32, et coaxialement avec celui-ci. Le premier élément de connexion 2 abrite par ailleurs un premier ensemble de fibres optiques 21a, 21b, reliées à leurs extrémités au premier connecteur optique 20.

Le premier élément de connexion 2 comprend aussi des pistes de connexion 5 métalliques annulaires, de même axe que le logement 32. Par rapport à la surface interne 33 délimitant ce logement, chaque piste de connexion 5 annulaire fait légèrement saillie vers l'intérieur du logement 32 (c'est-à-dire en direction de l'axe de symétrie par rotation du logement).

Chacune des pistes de connexion 5 du capot est associée à une piste de connexion 5' de la base 3'. Ainsi, la position de chaque piste de connexion 5 du capot 3 le long de l'axe du logement 32 correspond (est identique) à la position de la piste de connexion 5' associée de la base 3', le long de l'axe de la partie en saillie 32' de cette base.

Le premier élément de connexion 2 abrite un premier ensemble de connecteurs électriques 4, dont chacun est relié électriquement à l'une des pistes de connexion 5.

Pour connecter les premier et deuxièmes ensembles de fibres optiques 21a, 21b, 21a', 21b', ainsi que les premier et deuxième ensembles de conducteurs électriques 4, 4', le premier élément de connexion 2 est déposé sur le deuxième élément de connexion 2'. Grâce à leurs formes complémentaires, ces deux éléments de connexion 2, 2' s'emboîtent alors l'un avec l'autre.

La forme tronconique du logement 32 du capot 3, et de la partie en saillie 32' de la base 3', permet un guidage progressif des deux éléments de connexions l'un par rapport à l'autre, pour aboutir finalement à un emboitement coaxial, et cela sans avoir recours à des systèmes externes de positionnement à plusieurs degrés de liberté.

Lors de cet emboitement des premier et deuxième éléments de connexion 2, 2', les premier et deuxième connecteurs optiques 20, 20' sont eux aussi rapprochés progressivement l'un de l'autre pour venir s'emboiter coaxialement l'un avec l'autre, du fait de leur agencement sensiblement coaxial dans les éléments de connexions 2 et 2'. Comme cela sera expliqué en détail plus bas, l'emboitement des premier et deuxième connecteurs optiques 20, 20' permet de coupler optiquement les premier et deuxième ensemble de fibres optiques 21a, 21b, 21a', 21b'.

Par ailleurs, lors de l'emboitement du premier élément de connexion 2 avec le deuxième élément de connexion 2', chaque piste de connexion 5 de ce premier élément vient au contact de la piste de connexion 5' correspondante du deuxième élément de connexion 2', établissant ainsi la connexion électrique du premier ensemble de conducteurs électriques 4 avec le deuxième ensemble de conducteurs électriques 4'.

Le système de connexion sous-marin 1 permet ainsi, en déposant le premier ensemble de connexion 2 sur le deuxième ensemble de connexion 2', d'établir une connexion optique et électrique. Cette manipulation peut être réalisée rapidement, sans systèmes externes de positionnement de haute précision, et même si le système de connexion est soumis à ces contraintes mécaniques externes causées notamment par des courants marins présents dans la zone de mise en œuvre du système de connexion.

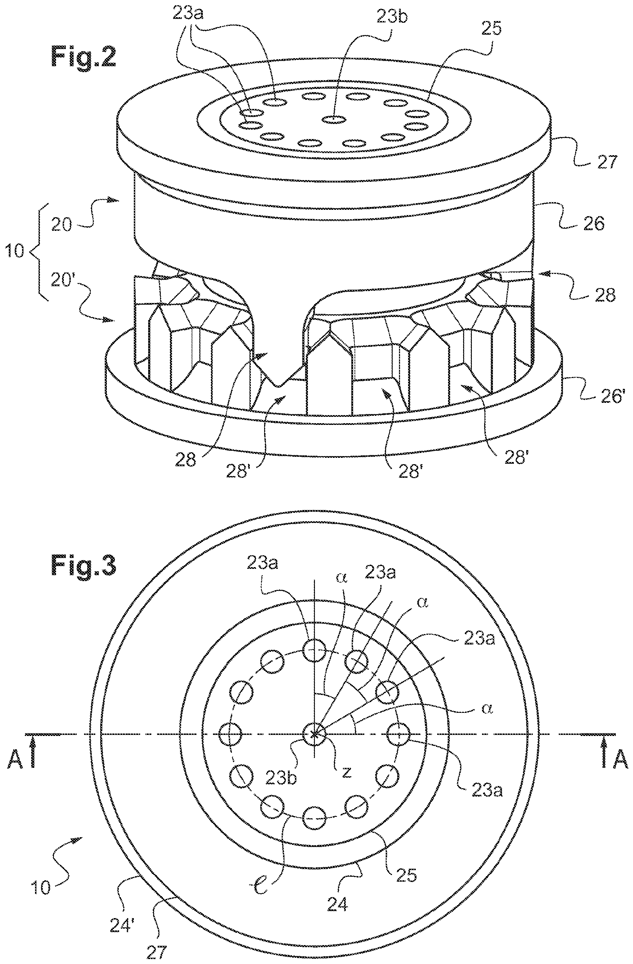

L'ensemble de connexion optique 10 du système de connexion 1 sous-marin qui vient d'être présenté est maintenant être décrit plus en détail, en référence aux figures 2 à 6.

Comme on peut le voir sur ces figures, les premier et deuxième connecteurs optiques 20, 20' de cet ensemble de connexion optique 10 présentent des structures comparables : ils présentent tous deux une forme extérieure globalement cylindrique (centrée sur leurs axes z, z' de symétrie respectifs - figures 2, 5 et 6), et comprennent notamment, l'un comme l'autre :
- une pluralité d'éléments de collimations 23a, 23b, 23a', 23b',
- un support 24, ou une embase 24', auquel (ou à laquelle) sont fixés les éléments de collimations, et
- une fenêtre de protection 29, 29' des éléments de collimations.

Les premier et deuxième connecteurs optiques 20, 20' diffèrent ici principalement l'un de l'autre en ce que :
- l'un de ces connecteurs comprend un ou plusieurs organes de positionnement angulaire mâles, tels que des dents ou des doigts 28 faisant saillie, tandis que l'autre comprend un ou plusieurs organes de positionnement femelles correspondants, tels que des évidements 28', chacun destiné à recevoir l'un des organes de positionnement angulaire mâles, et en ce que
- le premier connecteur optique 20 comprend en outre un palier 27, les autres éléments du support 24 étant mobiles en rotation par rapport à ce palier 27, autour d'un axe de rotation z.

Chaque organe de positionnement angulaire 28 du premier connecteur optique 20 est apte à imposer une position angulaire donnée au support 24 (et il en est de même des organes de positionnement angulaire complémentaires, femelles, de l'embase). Autrement formulé, cet organe est apte, lorsqu'il coopère avec un organe complémentaire tel que l'évidement 28', à empêcher une rotation du support 24 autour de l'axe de rotation z et à imposer une position angulaire donnée (autour de l'axe z) à ce support. Il s'agit donc d'un organe de mise en position, et non d'un organe de guidage en rotation tel qu'un roulement à billes.

Cet axe de rotation z correspondant coïncide ici avec l'axe de symétrie par rotation du premier connecteur optique 20 mentionné plus haut. Le premier connecteur optique 20 est destiné à être fixé au capot 3 par ce palier 27.

Les éléments de collimation 23a, 23b du premier connecteur optique 20 sont respectivement associés aux fibres optiques 21a, 21b du premier ensemble de fibres optiques, et, de manière comparable, les éléments de collimation 23a', 23b' du deuxième connecteur optique 20' sont respectivement associés aux fibres optiques 21a', 21b' du deuxième ensemble de fibres optiques.

Comme déjà indiqué, les premier et deuxième connecteurs optiques 20 et 20' de cet ensemble de connexion sont destinés à s'emboiter coaxialement l'un avec l'autre.

A cette fin, le support 24 et l'embase 24' comprennent des moyens de guidage, pour, lors de cet emboîtement, s'aligner progressivement l'un avec l'autre, et adopter en outre, l'un par rapport à l'autre, une position angulaire donnée dans laquelle les éléments de collimation 23a, 23b du premier connecteur optique 20 sont situés en vis-à-vis de ceux 23a', 23b' du deuxième connecteur optique 20'.

Les éléments de collimations 23a, 23b, 23a', 23b', et leurs agencements dans les premier et deuxième connecteurs optiques 20, 20' seront décrits tout d'abord. Les moyens de guidage et de positionnement précités seront décrits ensuite.

Chacun des éléments de collimation 23a, 23b, 23a', 23b' mentionné ci-dessus est adapté à collimater, c'est-à-dire à rendre sensiblement parallèle, le faisceau lumineux sortant de l'extrémité de la fibre optique 21a, 21b, 21a', 21b' qui lui est associée. Cet élément de collimation est également adapté, inversement, à coupler dans cette fibre optique un faisceau lumineux parallèle, incident sur l'élément de collimation parallèlement à un axe optique de cet élément de collimation.

Ici, les éléments de collimation 23a, 23b, 23a', 23b' sont réalisés chacun au moyen d'une lentille à gradient d'indice, présentant extérieurement la forme d'un cylindre dont l'axe correspond à l'axe optique de l'élément de collimation.

En variante, les éléments de collimation pourraient être réalisés chacun au moyen d'une ou plusieurs lentilles sphériques, plutôt qu'au moyen d'une telle lentille à gradient d'indice.

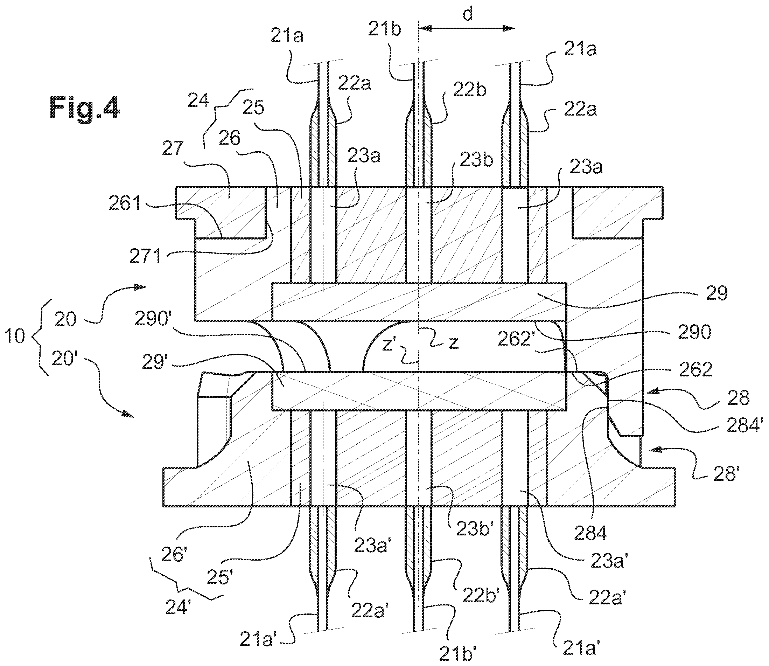

Ici, le support 24 comprend une première pièce de maintien 25, par exemple en résine ou en colle composite, qui reçoit et maintien les éléments de collimations 23a, 23b du premier connecteur optique 20 (figure 4).

De même, l'embase 24' comprend une deuxième pièce de maintien 25', par exemple en résine ou en colle composite, qui reçoit et maintien les éléments de collimations 23a', 23b' du deuxième connecteur optique 20'.

Les extrémités des fibres optiques 21a, 21b du premier ensemble de fibres optiques sont situées d'un même côté de la première pièce de maintien 25. De manière comparable, les extrémités des fibres optiques 21a', 21b' du deuxième ensemble de fibres optiques sont situées d'un même côté de la deuxième pièce de maintien 25'.

Chaque fibre optique 21a, 21b, 21a', 21b' est maintenue au droit de l'élément de collimation 23a, 23b, 23a', 23b' correspondant, ici au moyen d'un manchon 22a, 22b, 22a', 22b' élastique, par exemple en élastomère, en caoutchouc, ou en matériau thermoplastique.

Les éléments de collimation 23a, 23b sont agencés dans la première pièce de maintien 25 de manière à ce que leurs axes optiques s'étendent chacun parallèlement à l'axe de rotation z (et donc parallèlement entre eux). Les cylindres des lentilles à gradient d'indice sont ainsi agencés chacun avec leur axe parallèle à l'axe de rotation z.

De même, chaque élément de collimation 23a', 23b' du deuxième connecteur optique 20' est agencé dans la deuxième pièce de maintien 25' avec son axe optique parallèle à l'axe z'.

Une première extrémité de chacune des lentilles à gradient d'indice affleure ou débouche de la pièce de maintien 25, 25' qui la porte, du côté où sont raccordées les fibres optiques 21a', 21b'. Une deuxième extrémité, de sortie, de chacune de ces lentilles à gradient d'indice débouche, ou tout au moins est accessibles optiquement, de l'autre côté de cette pièce de maintien 25, 25'.

Le deuxième connecteur optique 20' comprend le même nombre d'éléments de collimations que le premier connecteur optique 20, soit ici 13 éléments de collimation.

Les éléments de collimations 23a, 23b du premier connecteur optique 20 sont agencés dans le support 24 de manière à former un ensemble centré sur cet axe de rotation z (figures 3 et 4).

De manière comparable, les éléments de collimations 23a', 23b' du deuxième connecteur optique 20' sont agencés dans l'embase 24' de manière à former eux aussi un ensemble centré sur l'axe z' de symétrie par rotation présenté par le deuxième connecteur 20'.

L'agencement de ces éléments de collimations 23a, 23b, 23a', 23b', respectivement par rapport à l'axe de rotation z, et par rapport à l'axe z', est décrit maintenant plus en détail.

Tout d'abord, l'un des éléments de collimation 23b du premier connecteur 20 est situé au niveau de l'axe de rotation z, c'est-à-dire que l'axe optique de cet élément de collimation 23b central coïncide avec l'axe de rotation z.

Les autres éléments de collimation 23a du premier connecteur sont agencés dans le support 24 (en l'occurrence dans la première pièce de maintien 25) de sorte à être équidistants de l'axe de rotation z, à une distance d donnée de cet axe. Ces éléments de collimation 23a périphériques sont donc répartis le long d'un cercle 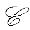 centré sur l'axe de rotation z. Ici, ils sont répartis régulièrement le long de ce cercle : l'écart angulaire α qui sépare deux éléments de collimation voisins, c'est-à-dire se suivant immédiatement le long de ce cercle est constant, indépendamment du couple d'éléments de collimation considérés.

Tel que représenté sur les figures, le premier connecteur optique 20 comprend 12 éléments de collimation 23a périphériques (en plus de l'élément de collimation 23b central). L'écart angulaire α séparant deux quelconques des éléments de collimation 23a périphériques se suivant immédiatement le long du cercle 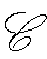 est alors égal à 360 degrés divisé par 12 (soit 30 degrés).

L'agencement des éléments de collimation 23a', 23b' du deuxième connecteur 20' dans l'embase 24', par rapport à l'axe z' de symétrie, est identique à l'agencement des éléments de collimation 23a, 23b du premier connecteur 20 par rapport à l'axe de rotation z.

Ainsi, l'un des éléments de collimation 23b', central, du deuxième connecteur optique 20', est disposé avec son axe optique coïncidant avec l'axe z' de symétrie de ce connecteur.

Quant aux autres éléments des collimations 23a', périphériques, de ce connecteur, ils sont agencés dans la deuxième pièce de maintien 25' de sorte à être équidistants de l'axe z', à une distance de cet axe égale à la distance d mentionnée ci-dessus.

De plus, les éléments de collimation 23a' périphériques du deuxième connecteur optique 20' sont eux aussi répartis régulièrement autour de l'axe z', d'un point de vue angulaire. Deux quelconques des éléments de collimation 23b' périphériques du deuxième connecteur optique 20', adjacents, sont ainsi séparés angulairement par le même écart angulaire α que deux éléments de collimation périphériques adjacents du premier connecteur optique 20.

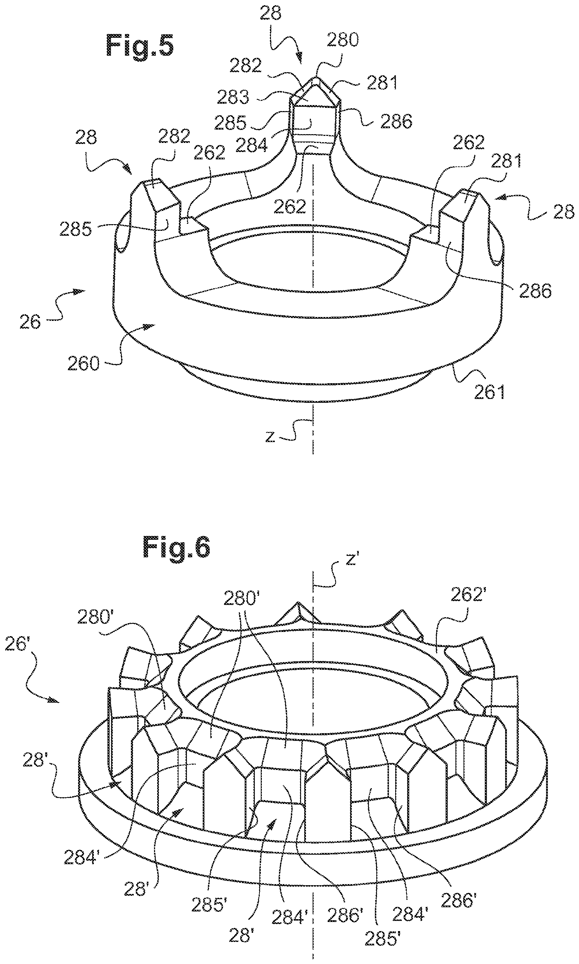

Du point de vue de sa structure mécanique, le support 24 du premier connecteur optique 20 comprend ici, en plus de la première pièce de maintien 25 et du palier 27, une première pièce de guidage 26 solidaire de la première pièce de maintien 25 (figures 4 et 5).

C'est cette première pièce de guidage 26 du support 24 qui est ici montée mobile en rotation dans le palier 27 pour réaliser le montage rotatif mentionné précédemment.

Cette première pièce de guidage 26 comprend un corps 260 présentant globalement la forme d'une bague qui enserre la première pièce de maintien 25. Ce corps 260 présente, du côté du premier ensemble de fibres optiques, un épaulement 261 circulaire destiné à recevoir le palier 27.

Ce palier 27, par exemple en polyamide, est réalisé sous la forme d'une bague engagée sur la première pièce de guidage 26 pour, d'une part, venir s'appuyer en butée sur l'épaulement 261 mentionné ci-dessus, et, d'autre part, guider la première pièce de guidage 26 en rotation autour de l'axe de rotation z.

Cet axe de rotation z correspond à l'axe du trou cylindrique 271 qui traverse le palier 27 et dans lequel est engagée ladite pièce 26.

Le support 24 présente par ailleurs au moins un organe de positionnement angulaire autour de l'axe de rotation z, ici plusieurs. Tel que représenté sur les figures, le support 24 présente plus précisément trois tels organes de positionnement, formés dans la première pièce de guidage 26 (les organes de positionnement et la première pièce de guidage 26 sont ainsi d'une seule pièce).

Chacun de ces organes de positionnement est ici un doigt 18 qui s'étend en saillie à partir du corps 260 de la pièce de guidage 26, à l'opposé du palier 27, sensiblement parallèlement à l'axe z (figures 4 et 5).

Chacun de ces doigts 28 présente, à l'opposé du corps 260, une extrémité libre 280 biseautée (figure 5). L'arrête définie par ce biseau est dirigée sensiblement radialement par rapport à l'axe de rotation z. Chacun de ces doigts 28 présente également deux faces de positionnement angulaire 285, 286, chacune de ces faces s'étendant dans un plan radial contenant l'axe de rotation z, de part et d'autre du doigt, à partir des surfaces 281, 282 définissant le biseau.

Chaque doigt 28 présente en outre, du côté interne de la pièce 26, c'est-à-dire du côté de l'axe de rotation z :
- à son extrémité libre 280, une face de guidage 283 inclinée vers l'axe de rotation z, et
- une face de centrage 284, ortho-radiale par rapport à l'axe de rotation z, ces faces de guidage 283 et de centrage 284 étant contigües.

Les doigts 28 de positionnement sont équidistants de l'axe de rotation z. Ainsi, les faces de centrage 284 présentées par ces doigts forment un ensemble centré sur l'axe de rotation z. Par ailleurs, les doigts 28 sont répartis régulièrement autour de cet axe, d'un point de vue angulaire. Ici, étant au nombre de trois, ils sont donc positionnés à 120 degrés les uns des autres.

Les doigts 28 de positionnement occupent une partie seulement de la circonférence du support 24, qui est ainsi ajouré latéralement.

Le corps 260 de la première pièce de guidage 26 présente, à la base de chaque doigt 28 de positionnement, une surface d'appui 262, plane, perpendiculaire à l'axe de rotation z, et donc perpendiculaire à la direction d'extension du doigt 28.

Pour ce qui est de l'embase 24' du deuxième connecteur 20', elle comprend ici une deuxième pièce de guidage 26', solidaire de la deuxième pièce de maintien 25' (figure 4), et conformée pour coopérer avec la première pièce de guidage 26 de manière à guider les premier et deuxième connecteurs optique 20, 20' l'un par rapport à l'autre lors de leur emboitement.

C'est par cette deuxième pièce de guidage 26' que le deuxième connecteur optique 20' est fixé à la base 3' du système de connexion 1 sous-marin.

Cette deuxième pièce de guidage 26' présente globalement la forme d'une bague d'axe z' qui enserre la deuxième pièce de maintien 25' (figures 4 et 6).

L'embase 24' présente par ailleurs au moins une forme 28' adaptée à coopérer avec l'un des organes de positionnement angulaire du support 24, de manière à ce que le support 24 et l'embase 24' adoptent, l'un par rapport à l'autre, ladite position angulaire donnée (pour laquelle les éléments de collimation du premier connecteur optique sont situés en vis-à-vis de ceux du deuxième connecteur optique).

Chacune de ces formes, qui constitue un organe de positionnement femelle, est ici un évidement 28' conçu pour recevoir l'un des doigts de positionnement 28 (figure 4). Cet évidement 28' est pratiqué en périphérie de la deuxième pièce de guidage 26'. Les organes de positionnement femelles 28', et la deuxième pièce de guidage 26' constituent ainsi une même pièce mécanique, d'un seul tenant.

Le nombre d'évidements 28' formés dans la deuxième pièce de guidage 26' est égal, ici, au nombre d'éléments de collimation 23a' périphériques du deuxième connecteur optique 20' (ici égal à 12).

Ces évidements 28' sont équidistants de l'axe z', et répartis régulièrement autour de celui-ci, d'un point de vue angulaire. Deux évidements 28' adjacents sont ainsi séparés par le même écart angulaire a, égal ici à 30 degrés, quel que soit le couple d'évidements 28' adjacents considéré (figure 6).

Chaque évidement 28' comprend une portion de centrage et de positionnement, et une portion de guidage 280' (figure 6).

La portion de centrage et de positionnement présente une forme complémentaire de celle de l'un quelconque des doigts 28 de positionnement. Cette portion comprend en particulier :
- deux faces de positionnement angulaire 285', 286', chacune de ces faces s'étendant dans un plan radial contenant l'axe z', de part et d'autre de l'évidement 28', et
- une face de centrage 284', qui s'étend de manière ortho-radiale par rapport à l'axe z' et qui est orientée vers l'extérieur de la deuxième pièce de guidage 26' (à l'opposé de l'axe z').

Les faces de centrage 284' des différents évidements 28' sont ainsi agencées comme si elles étaient réparties sur une surface cylindrique centrée sur l'axe z' de symétrie du deuxième connecteur optique 20'.

La portion de guidage 280' présente quant à elle une surface évasée, à la manière d'un entonnoir dont l'extrémité la plus resserrée se raccorde à la portion de centrage et de positionnement de l'évidement 28' considéré. Ici, l'extrémité la plus resserrée de la portion de guidage 280' se raccorde ainsi aux faces de positionnement angulaire 285', 286' et à la face de centrage 284'. L'extrémité la plus large de la portion de guidage 280' correspond à l'ouverture de l'évidement 28'.

La portion de guidage 280' se raccorde, à son extrémité la plus évasée (à l'opposé des faces de positionnement angulaire 285', 286' et de centrage 284'), à une face d'appui 262', plane, perpendiculaire à l'axe z'.

En outre, les portions de guidage 280' de deux évidements 28' adjacents sont contigües : elles se raccordent l'une à l'autre au niveau d'une arrête, sensiblement radiale par rapport à l'axe z'.

Les éléments de collimation 23a, 23b du premier connecteur optique 20 sont protégés par la première fenêtre de protection 29 de ce connecteur. De même, les éléments de collimation 23a', 23b' du deuxième connecteur optique 20' sont protégés par la deuxième fenêtre de protection 29 dont est pourvu le deuxième connecteur optique (figure 4).

La première 29, comme la deuxième fenêtre de protection 29', recouvre plus précisément les extrémités de sortie des éléments de collimation 23a, 23b, 23a', 23b' du connecteur optique 20, 20' correspondant, à l'opposé des extrémités des fibres optiques 21a, 21b, 21a', 21b' reliées à ce connecteur.

Chacune de ces fenêtres de protection 29, 29', réalisée par exemple en saphir, est transparente et présente une résistance élevée aux rayures. Elle présente, à l'opposé des éléments de collimation 23a, 23b, 23a', 23b' qu'elle protège, une face externe 290, 290' plane.

Chacune des première et deuxième fenêtres de protection 29, 29' est fixée, respectivement à la première pièce de guidage 26, et à la deuxième pièce de guidage, et cela de manière étanche. Ainsi, un liquide situé du côté de la face externe 290, 290' de l'une de ces fenêtres de protection ne peut pas traverser le connecteur optique 20, 20' correspondant pour parvenir du côté des fibres optiques 21a, 21b, 21a', 21b'.

Une fois les premier et deuxième connecteurs optiques 20, 20' emboîtés l'un sur l'autre (ici par l'assemblage du premier élément de connexion 2 et du deuxième élément de connexion 2'), chaque doigt 28 de positionnement se trouve engagé dans l'un des évidements 28' de l'embase 24' (figure 2).

Dans cette configuration, la face de centrage 284 de chacun de ces doigts s'appuie contre la face de centrage 284' de l'évidement correspondant. Vu que les doigts 28 de positionnement sont ici au nombre de trois au moins, que l'ensemble des faces de centrage 284' de l'embase 24' est centré sur l'axe z', et que l'ensemble des faces de centrage 284 du support 24 est centré sur l'axe de rotation z, cela impose au support 24 d'être coaxial avec l'embase 24', c'est-à-dire d'être positionné avec son axe de rotation z coïncidant avec l'axe z' de symétrie de l'embase 24'.

Par ailleurs, les deux faces de positionnement angulaire 285', 286' de l'évidement 28' considéré, qui sont alors au contact des deux faces de positionnement angulaire 285, 286 de ce doigt 28, imposent au support 24 de se trouver dans la position angulaire donnée mentionnée précédemment.

Cette position angulaire donnée est l'une des positions angulaires de couplage, pour lesquelles chaque élément de collimation 23a, 23b du premier connecteur optique 20 est situé en vis-à-vis, c'est-à-dire au droit de l'un des éléments de collimation 23a', 23b' du deuxième connecteur optique 20', comme cela est représenté sur la figure 4.

Dans une telle position angulaire, un faisceau lumineux provenant de l'une des fibres optiques 21a, 21b, 21a', 21b' :
- sort de l'élément de collimation associé à cette fibre optique, sensiblement parallèle, centré sur l'axe optique de cet élément de collimation et parallèlement à cet axe,
- traverse les deux fenêtres de protection 29 et 29',
- puis pénètre dans l'élément de collimation situé en vis-à-vis du précédent, en l'occurrence en étant parallèle à l'axe optique de ce dernier élément de collimation, et en étant centré sur son axe, si bien que ce faisceau lumineux se trouve ensuite couplé (de l'autre côté de l'ensemble de connexion optique 10) dans la fibre optique reliée à ce dernier élément de collimation.

L'ensemble de connexion optique 10 présente ici plusieurs telles positions angulaires de couplage (positions angulaires du support par rapport à l'embase). Ici, deux positions angulaires de couplage voisines quelconques sont séparées par un même angle, égal ici à l'écart angulaire α entre éléments de collimation périphériques. Le fait que l'ensemble de connexion optique 10 ait plusieurs positions angulaires de couplage résulte ici du fait que :
- les éléments de collimations 23a, 23a' périphériques sont répartis régulièrement d'un point de vue angulaire, et de manière identique dans le support 24, et dans l'embase 24',
- le nombre n d'éléments de collimation périphériques présents dans chaque connecteur optique (ici, n=12) est un multiple du nombre d'organes de positionnement angulaire 28 du support 24 (ici égal à 3), et que
- le nombre n d'éléments de collimation périphériques présents dans chaque connecteur optique est un multiple du nombre d'organes de positionnement angulaires 28' de l'embase 24'.

Ici, le nombre d'organes de positionnement angulaires 28', femelles, de l'embase 24' (égal à 12) est supérieur au nombre d'organe de positionnement 28 mâles du support 24.

Le nombre n d'éléments de collimation périphériques présents dans chaque connecteur optique 20, 20' est supérieur ou égal, ici égal, au nombre de positions angulaires de couplage différentes de l'ensemble de connexion optique 10.

Les fibres optiques 21a, 21b du premier ensemble de fibres optiques, de même que celles 21a ', 21b' du deuxième ensemble de fibres optiques, sont ici indifférenciées, c'est-à-dire qu'elles sont du même modèle, et présentent ainsi des propriétés optiques identiques, ou tout au moins proches.

Vu que ces fibres optiques sont indifférenciées, l'une quelconque des positions angulaires de couplage convient pour coupler optiquement chaque fibre optiques 21a, 21b du premier ensemble à l'une des fibres optiques 21a', 21b' du deuxième ensemble.

Une fois ce couplage réalisé, il est possible de déterminer, par exemple au moyen de tests de transmission optique, laquelle des fibres optiques du premier ensemble a finalement été connectée à l'une des fibres optiques donnée du deuxième ensemble. Une procédure d'attribution et d'adressage peut alors être mise en œuvre afin de transmettre, sélectivement, à l'une des fibres optiques déterminée du deuxième ensemble de fibres optiques, un signal lumineux, émis depuis une zone distante de l'ensemble de connexion optique.

Le fait que plusieurs positions angulaires différentes conviennent ainsi, pour coupler les fibres optiques du premier ensemble à celles du deuxième ensemble, apporte une grande liberté dans le positionnement angulaire des premier et deuxième connecteurs optiques l'un par rapport à l'autre. Cette liberté de positionnement est particulièrement appréciable dans le contexte d'accès et de manipulation difficile auquel est destiné l'ensemble de connexion optique 10.

Lorsque les premier et deuxième connecteurs optiques 20, 20' sont emboîtés l'un sur l'autre, la surface d'appui 262 du support 24 vient s'appuyer en butée sur la face d'appui 262' de l'embase 24'. Les deux faces d'appui 262 et 262' coopèrent ainsi ensemble pour fixer la position relative du support 24 par rapport à l'embase 24' le long de l'axe z'.

Dans cette position, les faces externes 290 et 290' des deux fenêtres de protection 29, 29' sont situées à distance l'une de l'autre (figure 4).

Cette disposition, combiné au fait que le support 24 est ajouré latéralement, permet d'évacuer un liquide, tel que de l'eau de mer, présent avant emboitement entre les premier et deuxième connecteurs optiques 20, 20'. Cela permet aussi d'injecter ensuite un liquide, de nettoyage ou de remplissage, entre ces connecteurs, ce qui est particulièrement intéressant lorsque, comme ici, l'ensemble de connexion optique 10 équipe un système de connexion sous-marin.

Lorsque les deux connecteurs optiques 20, 20' sont rapprochés progressivement l'un de l'autre, avec leurs fenêtres de protection 19, 19' respectives qui se font face, l'extrémité libre 280 de chaque doigt 28 de positionnement s'engage progressivement dans la portion de guidage 280 de l'un des évidements 28 du deuxième connecteur optique 20'.

La face de guidage 283 du doigt, inclinée vers l'axe de rotation z, coopère alors avec la portion de guidage 280 de l'évidement 28, de forme évasée, pour guider progressivement le support 24 vers la configuration coaxiale qui a été présentée ci-dessus.

Par ailleurs, lorsque les deux connecteurs optiques 20, 20' sont ainsi rapprochés, du fait de la forme biseautée de l'extrémité libre 280 du doigt 28, et de la forme évasée de la portion de guidage 280', le support 24 tourne progressivement dans le palier 27, autour de l'axe de rotation z, pour adopter finalement l'une des positions angulaires de couplage.

Ainsi, les évidements 28' sont répartis sur toute la circonférence de l'embase 24', avec leurs ouvertures contigües les unes des autres. Autrement formulé, deux ouvertures voisines se touchent, en étant séparées seulement par une arrête. N'importe quelle position angulaire initiale du support 24 conduit donc finalement, après emboitement des premier et deuxième connecteurs optiques 20, 20', à l'une des positions angulaires de couplage précitées.

Ainsi, grâce à leurs structures, les premier et deuxième connecteurs optiques 20, 20' sont auto-alignants, et auto-indexants d'un point de vue angulaire. Leurs structures autorisent par ailleurs une grande tolérance sur les positions relatives de ces connecteurs avant le début de l'emboitement, tout en assurant un positionnement final précis.

Pour coupler optiquement le premier ensemble de fibres optiques 21a, 21b au deuxième ensemble de fibres optiques 21a', 21b', il suffit donc de rapprocher les premier et deuxième connecteurs optiques 20, 20', l'un en face de l'autre, sans qu'il soit nécessaire pour cela d'employer de complexes systèmes de positionnement commandables à plusieurs degrés de libertés.

Cette connexion optique peut ainsi être établie avec rapidité, facilité et fiabilité, ce qui est particulièrement appréciable en milieu d'accès difficile, comme par exemple lors de travaux en hauteurs, en zone montagneuse ou très ventée, ou encore, comme ici, sous l'eau, en présence de forts courants marins.

En variante, l'ensemble de connexion optique 10 pourrait comprendre un nombre d'éléments de collimations, de doigts de positionnement et/ou d'évidemment différents de ce qui a été présenté ci-dessus. Par exemple, le premier, comme le deuxième connecteur optique pourrait comprendre 9 éléments de collimation périphériques, au lieu de 12, le support comprenant alors 3 doigts, et l'embase comprenant 9 évidements, ou éventuellement 3 évidements.

On pourrait prévoir aussi que le support comprenne un seul doigt de positionnement, et que l'embase comprenne un seul évidemment correspondant, ce qui est suffisant pour, une fois emboité, placer le support dans ladite position angulaire donnée par rapport à l'embase. Ce dernier mode de réalisation requiert toutefois un positionnement du premier connecteur optique et du deuxième connecteur optique, l'un par rapport à l'autre, préalablement à leur emboitement, plus précis que dans le mode de réalisation décrit plus haut en référence aux figures (ce positionnement initial devant amener l'unique doigt de positionnement dans une position angulaire initiale proche de celle de l'évidement unique destiné à l'accueillir).

En variante encore, au lieu que le support soit pourvu des doigts de positionnement, et l'embase des évidements correspondants, on pourrait prévoir que ce l'embase qui soit pourvues de ces doigts, et que les évidements soient alors pratiqués dans le support.

Par ailleurs, ici, le support et l'embase sont chacun formés de deux pièces (la pièce de maintien des éléments de collimation, et la pièce de guidage). En variante, on pourrait toutefois prévoir que le support et/ou l'embase soient formés chacun d'une seule pièce (monobloc), ou, au contraire, comprenne des pièces intermédiaires, en plus des pièces de maintien 25, 25' et de guidage 26, 26'.

Dans une variante du système de connexion sous-marin qui a été décrit plus haut, on pourrait prévoir que le connecteur optique qui est pourvu du palier rotatif soit fixé, par ce palier, à la base 3', plutôt qu'au capot 3.

Par ailleurs, dans un autre mode de réalisation du système de connexion sous-marin, les éléments de connexion électrique, en particulier les pistes électriques précitées, pourraient être omis.

## Revendications

1. Ensemble de connexion optique (10) comprenant un premier connecteur optique (20) comprenant une pluralité d'éléments de collimation (23a, 23b) respectivement associés à une pluralité de fibres optiques (21a, 21b) et portés par un support (24), le support (24) étant monté rotatif dans un palier (27) autour d'un axe de rotation (z), les éléments de collimation (23a) étant agencés dans le support (24) de sorte à être équidistants de cet axe de rotation (z), et le support (24) présentant des organes de positionnement angulaire (28) pour fixer la position angulaire du support (24) autour dudit axe de rotation (z),
l'ensemble de connexion optique (10) comprenant un deuxième connecteur optique (20') comprenant une embase (24') portant des éléments optiques (23a', 23b'),
**caractérisé en ce que** l'embase (24') présente des organes de positionnement angulaire complémentaires (28'), chacun adapté à coopérer avec l'un des organes de positionnement angulaire (28) du premier connecteur optique (20) pour fixer la position angulaire relative du support (24) par rapport à l'embase (24'),
**en ce que** les éléments optiques (23a', 23b') du deuxième connecteur optique (20') sont des éléments de collimation, ladite position angulaire du support (24) par rapport à l'embase (24'), fixée par lesdits organes de positionnement, étant une position angulaire de couplage pour laquelle une partie au moins des éléments de collimation (23a, 23b) du premier connecteur optique (20) se trouvent situés en vis-à-vis d'éléments de collimation (23a', 23b') du deuxième connecteur optique (20'), et
**en ce que** l'ensemble de connexion optique (10) a plusieurs positions angulaires de couplage distinctes, les organes de positionnement angulaire (28) et les organes de positionnement angulaire complémentaires (28') étant agencés de manière à fixer la position angulaire relative du support (24) par rapport à l'embase (24'), indifféremment dans l'une ou l'autre desdites positions angulaires de couplage, chaque position angulaire de couplage étant telle que, dans cette position, une partie au moins des éléments de collimation (23a, 23b) du premier connecteur optique (20) se trouvent situés en vis-à-vis d'éléments de collimation (23a', 23b') du deuxième connecteur optique (20').

2. Ensemble de connexion optique (10) selon la revendication 1, dans lequel les organes de positionnement angulaire du premier connecteur optique, ou les organes de positionnement angulaires complémentaires (28') du deuxième connecteur optique (20'), sont réalisés sous la forme d'évidements (28') comprenant une portion de guidage (280') évasée du côté de l'ouverture de l'évidement (28'), les ouvertures desdits évidements (28') étant contigües les unes des autres.

3. Ensemble de connexion optique (10) selon la revendication 1 ou 2, dans lequel le nombre d'éléments de collimation (23a) du premier connecteur optique (20) qui sont équidistants de l'axe de rotation (z) est un multiple du nombre de positions angulaires de couplage de l'ensemble de connexion optique (10).

4. Ensemble de connexion optique (10) selon l'une des revendications 1 à 3, dans lequel le premier connecteur optique (20) comprend un élément de collimation (23b) additionnel situé au niveau de l'axe de rotation (z).

5. Ensemble de connexion optique (10) selon l'une des revendications 1 à 4, dans lequel l'un au moins des organes de positionnement angulaire (28) est un doigt saillant à partir du support (24).

6. Ensemble de connexion optique (10) selon l'une des revendications 1 à 5, dans lequel le support (24) présente une pluralité de doigts de positionnement.

7. Ensemble de connexion optique (10) selon l'une des revendications 1 à 6, dans lequel l'extrémité libre (280) du doigt est biseautée.

8. Ensemble de connexion optique (10) selon l'une des revendications 5 à 7, dans lequel l'un au moins desdits organes de positionnement angulaire complémentaires (28') est un évidement conçu pour recevoir ledit doigt (28).

9. Ensemble de connexion optique (10) selon l'une des revendication 1 à 8, dans lequel ledit support (24) présente une surface (262) plane à partir de laquelle s'étend l'un au moins des organes de positionnement angulaire (28), cette surface (262) étant perpendiculaire à la direction d'extension dudit organe de positionnement.

10. Ensemble de connexion optique (10) selon la revendication 9, dans lequel l'embase (24') comprend une face (262') plane conçue pour coopérer avec ladite surface (262) perpendiculaire à la direction d'extension de l'organe de positionnement angulaire (28).

11. Système de connexion (1) comprenant un ensemble de connexion optique (10) selon l'une des revendications 1 à 10 ;
ledit système de connexion comprenant :
- un premier connecteur électrique (2) comprenant un capot (3), au moins une piste (5) électriquement conductrice et le premier connecteur optique (20), dans lequel le palier (27) du premier connecteur optique (20) est solidaire du capot (3) et dans lequel la piste (5) électriquement conductrice entoure ledit axe de rotation (z), et
- un deuxième connecteur électrique (2') comportant une base (3'), au moins une autre piste (5') électriquement conductrice et le deuxième connecteur optique (20), dans lequel l'embase (24') du deuxième connecteur optique (20') est solidaire de la base (3').

## Patentansprüche

1. Optische Verbindungsanordnung (10) mit einem ersten optischen Verbinder (20), der eine Anzahl Kollimationselemente (23a, 23b) aufweist, die jeweils mit einer Anzahl optischer Fasern (21a, 21b) verbunden sind und von einem Träger (24) getragen werden, wobei der Träger (24) in einem Lager (27) um eine Drehachse (z) drehbar befestigt ist, wobei die Kollimationselemente (23a) im Träger (24) so angeordnet sind, daß sie zur Drehachse (z) den gleichen Abstand haben, und wobei der Träger (24) Organe (28) zum winkelmäßigen Positionieren aufweist, um die Winkelposition des Trägers (24) um die Drehachse (z) festzulegen,
wobei die optische Verbindungsanordnung (10) einen zweiten optischen Verbinder (20') aufweist, der einen die optischen Elemente (23a', 23b') tragenden Sockel (24') aufweist,
**dadurch gekennzeichnet,**
**daß** der Sockel (24') komplementäre Organe (28') zum winkelmäßigen Positionieren aufweist, wobei jedes dazu ausgelegt ist, mit einem der Organe (28) zum winkelmäßigen Positionieren des ersten optischen Verbinders (20) zusammenzuwirken, um die relative winkelmäßige Position des Trägers (24) gegenüber dem Sockel (24') festzulegen,
**daß** die optischen Elemente (23a', 23b') des zweiten optischen Verbinders (20') Kollimationselemente sind, wobei die durch die Positionierungsorgane festgelegte Winkelposition des Trägers (24) gegenüber dem Sockel (24') eine Kopplungswinkelposition ist, durch sich mindestens ein Teil der Kollimationselemente (23a, 23b) des ersten optischen Verbinders (20) gegenüber Kollimationselementen (23a', 23b') des zweiten optischen Verbinders (20') befindet, und
**daß** die optische Verbindungsanordnung (10) mehrere unterschiedliche Kopplungswinkelpositionen hat, wobei die Organe (28) zum winkelmäßigen Positionieren und die komplementären Organe (28') zum winkelmäßigen Positionieren so angeordnet sind, daß sie die relative Winkelposition des Trägers (24) gegenüber dem Sockel (24') sowohl in der einen als auch in der anderen der Kopplungswinkelpositionen festlegt, wobei jede Kopplungswinkelposition so ist, daß sich in dieser Position mindestens ein Teil der Kollimationselemente (23a, 23b) des ersten optischen Verbinders (20) gegenüber Kollimationselementen (23a', 23b') des zweiten optischen Verbinders (20') befindet.

2. Optische Verbindungsanordnung (10) gemäß Anspruch 1, bei der die Organe zum winkelmäßigen Positionieren des ersten optischen Verbinders oder die komplementären Organe (28') zum winkelmäßigen Positionieren des zweiten optischen Verbinders (20') in Form von Aushöhlungen (28') ausgeführt sind, die auf der Seite der Öffnung der Aushöhlung (28') einen trichterartig erweiterten Führungsabschnitt (280') aufweisen, wobei die Öffnungen der Aushöhlungen (28') aneinander anliegen.

3. Optische Verbindungsanordnung (10) gemäß Anspruch 1 oder 2, bei der die Anzahl Kollimationselemente (23a) des ersten optischen Verbinders (20), die von der Drehachse (z) denselben Abstand haben, ein Vielfaches der Anzahl Kopplungswinkelpositionen der optischen Verbindungsanordnung (10) ist.

4. Optische Verbindungsanordnung (10) gemäß einem der Ansprüche 1 bis 3, bei der der erste optische Verbinder (20) ein an der Drehachse (z) gelegenes zusätzliches Kollimationselement (23b) aufweist.

5. Optische Verbindungsanordnung (10) gemäß einem der Ansprüche 1 bis 4, bei der mindestens eins der Organe (28) zum winkelmäßigen Positionieren eine aus dem Träger (24) herausragende Nase ist.

6. Optische Verbindungsanordnung (10) gemäß einem der Ansprüche 1 bis 5, bei der der Träger (24) eine Anzahl Positionierungsnasen aufweist.

7. Optische Verbindungsanordnung (10) gemäß einem der Ansprüche 1 bis 6, bei der das freie Ende (280) der Nase abgeschrägt ist.

8. Optische Verbindungsanordnung (10) gemäß einem der Ansprüche 5 bis 7, bei der mindestens eins der komplementären Organe (28') zum winkelmäßigen Positionieren eine zur Aufnahme der Nase (28) ausgelegte Vertiefung ist.

9. Optische Verbindungsanordnung (10) gemäß einem der Ansprüche 1 bis 8, bei der der Träger (24) eine ebene Fläche (262) aufweist, von der aus sich mindestens eins der Organe (28) zum winkelmäßigen Positionieren erstreckt, wobei die Fläche (262) senkrecht zur Erstreckungsrichtung des Positionierungsorgans ist.

10. Optische Verbindungsanordnung (10) gemäß Anspruch 9, bei der der Sockel (24') eine ebene Seite (262') aufweist, die dazu ausgelegt ist, mit der zur Erstreckungsrichtung des Positionierungsorgans (28) senkrechten Fläche (262) zusammenzuwirken.

11. Verbindungssystem (1) mit einer optischen Verbindungsanordnung (10) gemäß einem der Ansprüche 1 bis 10,
wobei das Verbindungssystem
- einen ersten elektrischen Verbinder (2) mit einer Haube (3), mindestens einer elektrisch leitenden Bahn (5) und dem ersten optischen Verbinder (20), wobei das Lager (27) des ersten optischen Verbinders (20) mit der Haube (3) verbunden ist und wobei die elektrisch leitende Bahn (5) die Drehachse (z) umgibt, und
- einen zweiten elektrischen Verbinder (2') mit einer Basis (3'), mindestens einer weiteren elektrisch leitenden Bahn (5') und dem zweiten optischen Verbinder (20'), wobei der Sockel (24') des zweiten optischen Verbinders (20') mit der Basis (3') fest verbunden ist, aufweist.

## Claims

1. Optical connection assembly (10) comprising a first optical connector (20) comprising a plurality of collimation elements (23a, 23b) associated with a plurality of optical fibres (21a, 21b), respectively, and carried by a support (24),the support (24) being mounted for rotation in a bearing (27) about a rotation axis (z), in that the collimation elements (23a) are arranged in the support (24) so as to be equidistant from this rotation axis (z), and in that the support (24) has angular positioning members (28) for fixing the angular position of the support (24) about said rotation axis (z)
the optical connection assembly (10) comprising a second optical connector (20') comprising a base (24') carrying optical elements (23a', 23b')
**characterized in that** the base (24') has complementary angular positioning members (28'), each adapted to cooperate with one of the angular positioning members (28) of the first optical connector (20) to fix the relative angular position of the support (24) with respect to the base (24'),
**in that** the optical elements (23a', 23b') of the second optical connector (20') are collimation elements, said angular position of the support (24) with respect to the base (24'), fixed by said positioning members, being a coupling angular position for which a part at least of the collimation elements (23a, 23b) of the first optical connector (20) is located facing collimation elements (23a', 23b') of the second optical connector (20'), and
**in that** the optical connection assembly (10) has several distinct coupling angular positions, the angular positioning members (28) and the complementary angular positioning members (28') being then arranged so as to fix the relative angular position of the support (24) with respect to the base (24'), indifferently in either one of said coupling angular positions, each coupling angular position being such that, in this position, a part at least of the collimation elements (23a, 23b) of the first optical connector (20) is located facing collimation elements (23a', 23b') of the second optical connector (20').

2. Optical connection assembly (10) according to claim 1, wherein the angular positioning members of the first optical connector, or the complementary angular positioning members (28') of the second optical connector (20'), are made in the form of recesses (28') comprising a guiding portion (280') flared on the side of the recess (28') opening, the openings of said recesses (28') being adjacent to each other.

3. Optical connection assembly (10) according to claim 1 or 2, wherein the number of collimation elements (23a) of the first optical connector (20) that are equidistant from the rotation axis (z) is a multiple of the number of coupling angular positions of the optical connection assembly (10).

4. Optical connection assembly (10) according to one of claims 1 to 3, further comprising an additional collimation element (23b) located at the rotation axis (z).

5. Optical connection assembly (10) according to one of claims 1 to 4, wherein at least one of the angular positioning members (28) is a finger protruding from said support (24).

6. Optical connection assembly (10) according to one of claims 1 to 5, wherein the support (24) has a plurality of positioning fingers.

7. Optical connection assembly (10) according to one of claims 1 to 6, wherein the free end (280) of the finger is bevelled.

8. Optical connection assembly (10) according to one of claims 5 to 7, wherein at least one of said complementary angular positioning members (28') is a recess designed to receive said finger (28).

9. Optical connection assembly (10) according to one of claims 1 to 8, wherein said support (24) has a planar surface (262) from which extends one at least of the angular positioning members (28), this surface (262) being perpendicular to the direction of extension of said positioning member.

10. Optical connection assembly (10) according to claim 9, wherein the first optical connector (20) is in accordance with claim 6, and wherein the base (24') comprises a planar face (262') designed to cooperate with said surface (262) perpendicular to the extension of the angular positioning member (28).

11. Connection system (1) comprising an optical connection assembly (10) according to one of claims 1 to 10;
said connection system comprising:
- a first electrical connector (2) comprising a cover (3), at least one electrically conductive track (5) and an optical connector (20) according to one of claims 1 to 6, wherein the bearing (27) is integral with the cover (3) and wherein the electrically conductive track (5) surrounds said rotation axis (z), and
- a second electrical connector (2') comprising a base (3'), at least another electrically conductive track (5') and the second optical connector (20'), wherein the base (24') of the second optical connector (20') is integral with the cover (3).
